# EUROPEAN PATENT APPLICATION

(11) **EP 4 787 948 A1**
(43) Date of publication of application: **05.08.2026**
(21) Application number: 24869862.3
(22) Date of filing: 17.06.2024
(51) Int. Cl.: H04W 28/02

(54) **CONGESTION CONTROL METHOD AND APPARATUS, AND READABLE STORAGE MEDIUM**

(30) Priority: 25.09.2023 CN 202311247078
(71) Applicant: Datang Mobile Communications Equipment Co., Ltd., Beijing 100085 (CN)
(72) Inventor: ZHAO, Yali, Beijing 100085 (CN); BERTRAND, Pierre, Beijing 100085 (CN)
(74) Representative: dompatent
(86) International application number: PCT/CN2024/099542
(87) International publication number: WO 2025/066300

(57) **Abstract**

This disclosure discloses a congestion control method and apparatus, and a readable storage medium, and relates to the field of communication technology. The method includes: when a first condition is met, performing one or more of the following operations: canceling a triggered delay status reporting; stopping a packet data convergence protocol (PDCP) discard timer; and disabling delay status reporting (DSR) triggering.

## Description

### CROSS-REFERENCE TO RELATED APPLICATION

This application claims priority to Chinese Patent Application No. 202311247078.9, filed on September 25, 2023, entitled "congestion control method and apparatus, and readable storage medium", disclosure of which is incorporated herein by reference in its entirety.

### TECHNICAL FIELD

This disclosure relates to the field of communication technology, and in particular to a congestion control method and apparatus, and a readable storage medium.

### BACKGROUND

Extended Reality (XR) and Cloud Game (CG), as some of the most important media applications of 5th generation mobile communication technologies (5G), require low latency, high throughput, and high reliability, and require the transmission of large amounts of data in a short period. XR is a general term for different types of reality, referring to all environments and human-computer interactions generated by computer technology and devices that combine real and virtual elements. Representative forms of XR includes Augmented Reality (AR), Mixed Reality (MR), Virtual Reality (VR) and the like.

XR services are modeled according to data frames. For example, each data frame can correspond to an XR video frame. The same frame can be divided into one or more protocol data unit sets (PDU sets). One PDU set contains multiple protocol data units (PDUs).

Once a terminal connects to the network, the surge in data volume from terminal services can lead to network congestion. Therefore, how to resolve network congestion is a technical issue that needs to be considered.

### SUMMARY

Embodiments of this disclosure provide a congestion control method and apparatus, and a readable storage medium, to alleviate network congestion.

In a first aspect, an embodiment of this disclosure provides a congestion handling method, performed by a terminal, including:
when a first condition is met, performing one or more of the following operations:
cancelling a triggered delay status reporting (DSR);
stopping a packet data convergence protocol (PDCP) discard timer;
disabling DSR triggering.

In some embodiments, the first condition includes one or more of the following:
it is determined that a network device serving the terminal is in a congested state;
it is determined that one or more cells serving the terminal are in a congested state;
first indication information sent by a network device is received;
it is determined that a discard operation needs to be performed on a first target object;
wherein the first indication information is used for indicating that the terminal is to perform or activate protocol data unit set importance (PSI)-based discarding;
the first target object includes one or more of the following: PDCP service data unit (SDU), PDCP protocol data unit (PDU), and protocol data unit set (PDU set).

In some embodiments, it is determined that the network device serving the terminal is in the congested state in a case that one or more of the following conditions are met:
second indication information sent by the network device is received;
an amount of data in a buffer of the terminal exceeds a first threshold;
an amount of data for a second target object in a buffer of the terminal exceeds a second threshold.

In some embodiments, the second indication information is used for indicating one or more of the following:
the network device is in a congested state;
the terminal is to perform or activate PSI-based discarding;
the terminal is to use a PDCP discard timer duration corresponding to a congested state, wherein a PDCP discard timer corresponding to the congested state is maintained for a target PDCP SDU, target PDCP PDU, or target PDU set.

In some embodiments, it is determined that a cell serving the terminal is in the congested state in a case that one or more of the following conditions are met:
third indication information sent by the network device for the cell is received;
an amount of data in a buffer of the terminal that needs to be transmitted using the cell exceeds a third threshold;
an amount of data for a second target object in a buffer of the terminal that needs to be transmitted using the cell exceeds a fourth threshold.

In some embodiments, the third indication information is used for indicating one or more of the following:
the cell is in a congested state;
the terminal is to perform or activate PSI-based discarding in the cell;
the terminal is to use a PDCP discard timer duration corresponding to a congested state in the cell, wherein a PDCP discard timer corresponding to the congested state is maintained for a target PDCP SDU, target PDCP PDU, or target PDU set.

In some embodiments, the second target object includes one or more of the following:
data radio bearer (DRB), logical channel group (LCG), logical channel (LCH), PDU set.

In some embodiments, one or more of the first indication information, the second indication information, and the third indication information are carried by one or more of the following signaling:
radio resource control (RRC) signaling;
medium access control (MAC) control element (CE);
physical layer signaling.

In some embodiments, one or more of the first indication information, the second indication information, and the third indication information are further used for indicating a PSI threshold.

In some embodiments, the cancelling the triggered DSR includes one or more of the following:
cancelling a DSR triggered by a third target object;
cancelling a DSR including data of the third target object;
cancelling all triggered DSRs;
wherein the third target object includes one or more of the following:
   a PDU set whose PSI value is lower than a preset PSI threshold;
   a PDCP SDU that the terminal needs to discard;
   a PDCP PDU that the terminal needs to discard;
   a PDU set that the terminal needs to discard.

In some embodiments, the stopping the PDCP discard timer includes one or more of the following:
stopping a PDCP discard timer corresponding to a PDCP SDU that the terminal needs to discard;
stopping a PDCP discard timer corresponding to a PDCP PDU that the terminal needs to discard;
stopping a PDCP discard timer corresponding to a PDU set that the terminal needs to discard.

In some embodiments, the disabling DSR triggering includes one or more of the following:
disabling DSR triggering;
in a case that a remaining time corresponding to a fourth target object that the terminal needs to discard is less than or equal to a fifth threshold, disabling DSR triggering;
in a case that a remaining time corresponding to a fifth target object that the terminal has already discarded is less than or equal to a sixth threshold, disabling DSR triggering;
wherein the fourth target object or the fifth target object includes one or more of the following:
   PDCP SDU;
   PDCP PDU;
   PDU set.

In some embodiments, the method further includes:
in a case that it is determined that the discard operation needs to be performed on the first target object, and a remaining time corresponding to the first target object is less than or equal to a seventh threshold, disabling DSR triggering;

In some embodiments, the method further includes:
receiving configuration information sent by a network device; and
determining, based on the configuration information, whether to perform one or more of the following operations: cancelling the triggered DSR, stopping the PDCP discard timer, and disabling DSR triggering.

In a second aspect, an embodiment of this disclosure provides a congestion handling method, performed by a network device, including:
sending configuration information and/or indication information to a terminal;
wherein the configuration information is used for configuring the terminal to perform one or more of the following operations when a first condition is met:
   cancelling a triggered DSR;
   stopping a PDCP discard timer;
   disabling DSR triggering;
   the indication information includes one or more of the following:
      first indication information;
      second indication information;
      third indication information.

In some embodiments, the first indication information is used for indicating that the terminal is to perform or activate PSI-based discarding.

In some embodiments, the second indication information is used for indicating one or more of the following:
the network device is in a congested state;
the terminal is to perform or activate PSI-based discarding;
the terminal is to use a PDCP discard timer duration corresponding to a congested state, wherein a PDCP discard timer corresponding to the congested state is maintained for a target PDCP SDU, target PDCP PDU, or target PDU set.

In some embodiments, the third indication information is used for indicating one or more of the following:
one or more cells serving the terminal are in a congested state;
the terminal is to perform or activate PSI-based discarding in the cell;
the terminal is to use a PDCP discard timer duration corresponding to a congested state in the cell, wherein a PDCP discard timer corresponding to the congested state is maintained for a target PDCP SDU, target PDCP PDU, or target PDU set.

In some embodiments, one or more of the first indication information, the second indication information, and the third indication information are carried by one or more of the following signaling:
RRC signaling;
MAC CE;
physical layer signaling.

In some embodiments, one or more of the first indication information, the second indication information, and the third indication information are further used for indicating a PSI threshold.

In a third aspect, an embodiment of this disclosure provides a congestion handling apparatus applied to a terminal, including: a memory, a transceiver, and a processor;
wherein the memory is used for storing a computer program; the transceiver is used for sending and receiving data under the control of the processor; and the processor is used for reading the computer program from the memory and performing the following step:
when a first condition is met, performing one or more of the following operations:
cancelling a triggered DSR;
stopping a PDCP discard timer;
disabling DSR triggering.

In some embodiments, the first condition includes one or more of the following:
it is determined that a network device serving the terminal is in a congested state;
it is determined that one or more cells serving the terminal are in a congested state;
first indication information sent by a network device is received;
it is determined that a discard operation needs to be performed on a first target object;
wherein the first indication information is used for indicating that the terminal is to perform or activate protocol data unit set importance (PSI)-based discarding;
the first target object includes one or more of the following: PDCP SDU, PDCP PDU, PDU set.

In some embodiments, it is determined that the network device serving the terminal is in the congested state in a case that one or more of the following conditions are met:
second indication information sent by the network device is received;
an amount of data in a buffer of the terminal exceeds a first threshold;
an amount of data for a second target object in a buffer of the terminal exceeds a second threshold.

In some embodiments, the second indication information is used for indicating one or more of the following:
the network device is in a congested state;
the terminal is to perform or activate PSI-based discarding;
the terminal is to use a PDCP discard timer duration corresponding to a congested state, wherein a PDCP discard timer corresponding to the congested state is maintained for a target PDCP SDU, target PDCP PDU, or target PDU set.

In some embodiments, it is determined that a cell serving the terminal is in the congested state in a case that one or more of the following conditions are met:
third indication information sent by the network device for the cell is received;
an amount of data in a buffer of the terminal that needs to be transmitted using the cell exceeds a third threshold;
an amount of data for a second target object in a buffer of the terminal that needs to be transmitted using the cell exceeds a fourth threshold.

In some embodiments, the third indication information is used for indicating one or more of the following:
the cell is in a congested state;
the terminal is to perform or activate PSI-based discarding in the cell;
the terminal is to use a PDCP discard timer duration corresponding to a congested state in the cell, wherein a PDCP discard timer corresponding to the congested state is maintained for a target PDCP SDU, target PDCP PDU, or target PDU set.

In some embodiments, the second target object includes one or more of the following:
data radio bearer (DRB), logical channel group (LCG), logical channel (LCH), PDU set.

In some embodiments, one or more of the first indication information, the second indication information, and the third indication information are carried by one or more of the following signaling:
RRC signaling;
MAC CE;
physical layer signaling.

In some embodiments, one or more of the first indication information, the second indication information, and the third indication information are further used for indicating a PSI threshold.

In some embodiments, the cancelling the triggered DSR includes one or more of the following:
cancelling a DSR triggered by a third target object;
cancelling a DSR including data of the third target object;
cancelling all triggered DSRs;
wherein the third target object includes one or more of the following:
   a PDU set whose PSI value is lower than a preset PSI threshold;
   a PDCP SDU that the terminal needs to discard;
   a PDCP PDU that the terminal needs to discard;
   a PDU set that the terminal needs to discard.

In some embodiments, the stopping the PDCP discard timer includes one or more of the following:
stopping a PDCP discard timer corresponding to a PDCP SDU that the terminal needs to discard;
stopping a PDCP discard timer corresponding to a PDCP PDU that the terminal needs to discard;
stopping a PDCP discard timer corresponding to a PDU set that the terminal needs to discard.

In some embodiments, the processor is further configured to read a computer program from the memory and perform the following operations:
receiving configuration information sent by a network device; and
determining, based on the configuration information, whether to perform one or more of the following operations: cancelling the triggered DSR, stopping the PDCP discard timer, and disabling DSR triggering.

In some embodiments, the processor is further used for reading the computer program from the memory and performing one or more of the following:
disabling DSR triggering;
in a case that a remaining time corresponding to a fourth target object that the terminal needs to discard is less than or equal to a fifth threshold, disabling DSR triggering;
in a case that a remaining time corresponding to a fifth target object that the terminal has already discarded is less than or equal to a sixth threshold, disabling DSR triggering;
wherein the fourth target object or the fifth target object includes one or more of the following:
   PDCP SDU;
   PDCP PDU;
   PDU set.

In some embodiments, the processor is further configured to read a computer program from the memory and perform the following operations:
in a case that it is determined that the discard operation needs to be performed on the first target object, and a remaining time corresponding to the first target object is less than or equal to a seventh threshold, disabling DSR triggering;

In a fourth aspect, an embodiment of this disclosure provides a congestion handling apparatus applied to a network device, including: a memory, a transceiver, and a processor;
wherein the memory is used for storing a computer program; the transceiver is used for sending and receiving data under the control of the processor; and the processor is used for reading the computer program from the memory and performing the following step:
sending configuration information and/or indication information to a terminal;
wherein the configuration information is used for configuring the terminal to perform one or more of the following operations when a first condition is met:
   cancelling a triggered DSR;
   stopping a PDCP discard timer;
   disabling DSR triggering;
   the indication information includes one or more of the following:
      first indication information;
      second indication information;
      third indication information.

In some embodiments, the first indication information is used for indicating that the terminal is to perform or activate PSI-based discarding.

In some embodiments, the second indication information is used for indicating one or more of the following:
the network device is in a congested state;
the terminal is to perform or activate PSI-based discarding;
the terminal is to use a PDCP discard timer duration corresponding to a congested state, wherein a PDCP discard timer corresponding to the congested state is maintained for a target PDCP SDU, target PDCP PDU, or target PDU set.

In some embodiments, the third indication information is used for indicating one or more of the following:
one or more cells serving the terminal are in a congested state;
the terminal is to perform or activate PSI-based discarding in the cell;
the terminal is to use a PDCP discard timer duration corresponding to a congested state in the cell, wherein a PDCP discard timer corresponding to the congested state is maintained for a target PDCP SDU, target PDCP PDU, or target PDU set.

In some embodiments, one or more of the first indication information, the second indication information, and the third indication information are carried by one or more of the following signaling:
RRC signaling;
MAC CE;
physical layer signaling.

In some embodiments, one or more of the first indication information, the second indication information, and the third indication information are further used for indicating a PSI threshold.

In a fifth aspect, an embodiment of this disclosure provides a congestion handling apparatus applied to a terminal, including:
a first processing unit, configured to perform one or more of the following operations when a first condition is met:
cancelling a triggered DSR;
stopping a PDCP discard timer;
disabling DSR triggering.

In a sixth aspect, an embodiment of this disclosure provides a congestion handling apparatus applied to a network device, including:
a first sending unit, configured to send configuration information and/or indication information to a terminal;
wherein the configuration information is used for configuring the terminal to perform one or more of the following operations when a first condition is met:
   cancelling a triggered DSR;
   stopping a PDCP discard timer;
   disabling DSR triggering;
   the indication information includes one or more of the following:
      first indication information;
      second indication information;
      third indication information.

In a seventh aspect, an embodiment of this disclosure further provides a processor-readable storage medium storing a computer program. The computer program, when executed by a processor, implements the steps of the congestion handling method described above.

In the embodiments of this disclosure, the terminal may, when the first condition is met, execute one or more of the following actions: canceling the triggered DSR, stopping the PDCP discard timer, and disabling DSR triggering, thereby reducing the amount of data to be sent uplink and alleviating network congestion.

### BRIEF DESCRIPTION OF THE DRAWINGS

Fig. 1 is a flow chart of a congestion handling method according to an embodiment of this disclosure;
Fig. 2 is another flowchart of a congestion handling method according to an embodiment of this disclosure;
Fig. 3 is yet another flowchart of a congestion handling method according to an embodiment of this disclosure;
Fig. 4 is still another flowchart of a congestion handling method according to an embodiment of this disclosure;
Fig. 5 is a structural diagram of a congestion handling apparatus according to an embodiment of this disclosure;
Fig. 6 is another structural diagram of a congestion handling apparatus according to an embodiment of this disclosure;
Fig. 7 is yet another structural diagram of a congestion handling apparatus according to an embodiment of this disclosure;
Fig. 8 is still another structural diagram of a congestion handling apparatus according to an embodiment of this disclosure.

### DETAILED DESCRIPTION

In the description of the embodiments of this disclosure, the term "and/or" describes the relationship between related objects, indicating that three relationships can exist. For example, A and/or B can represent three cases: A alone, A and B simultaneously, and B alone. The character "/" generally indicates that the preceding and following related objects have an "or" relationship.

In the description of the embodiments of this disclosure, the term "multiple" refers to two or more, and other quantifiers are similar.

Technical solutions of the embodiments of this disclosure will be clearly and thoroughly described below with reference to the accompanying drawings. Obviously, the described embodiments are only some embodiments of this disclosure, and not all embodiments. Based on the embodiments of this disclosure, all other embodiments obtained by those of ordinary skill in the art without creative effort are within the scope of this disclosure.

Embodiments of this disclosure provide a congestion handling method and apparatus for alleviating network congestion.

The method and the apparatus are based on the same concept. Since the methods and the apparatus solve problems in similar ways, for the implementation of one of the apparatus and method, reference may be made to the other of apparatus and method, and the repeated parts will not be described again.

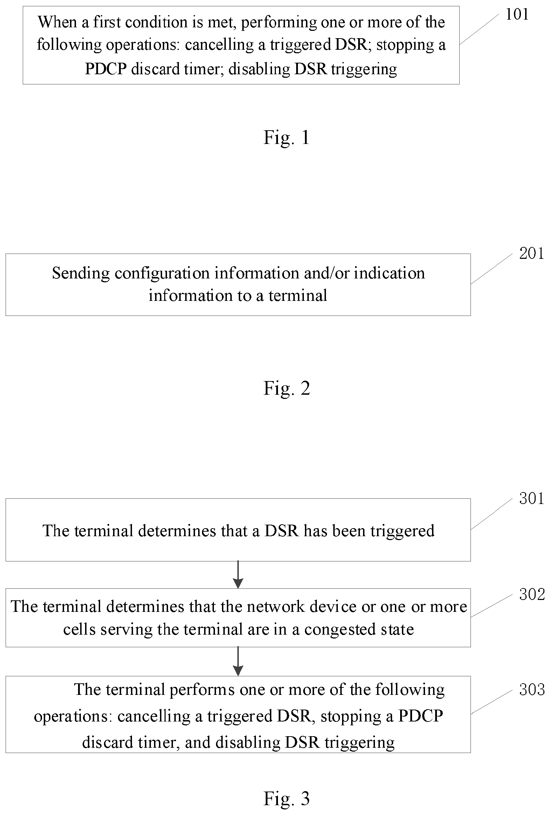

Referring to Fig. 1, which is a flowchart of a congestion handling method according to an embodiment of this disclosure, the method is performed by a terminal, and as shown in Fig. 1, includes:
step 101: when a first condition is met, performing one or more of the following operations:
cancelling a triggered DSR; stopping a PDCP discard timer; disabling DSR triggering.

The first condition includes one or more of the following:
it is determined that a network device serving the terminal is in a congested state;
it is determined that one or more cells serving the terminal are in a congested state; first indication information sent by a network device is received; it is determined that a discard operation needs to be performed on a first target object.

The first indication information is used for indicating that the terminal is to perform or activate PSI-based discarding, including discarding based on PDCP SDU and/or PDCP PDU and/or PDU set; the first target object includes one or more of the following: PDCP SDU, PDCP PDU, PDU set. The target PDCP SDU can be any PDCP SDU, the target PDCP PDU can be any PDCP PDU, and the target PDU set can be any PDU set.

Here, the expression "it is determined that a discard operation needs to be performed on a first target object" can be understood as follows: the first target object has not actually been discarded yet, rather, a judgment result has been obtained, which indicates that a discard operation needs to be performed on the first target object.

Specifically, a terminal may determine that the network device serving the terminal is in a congested state if one or more of the following conditions are met:
second indication information sent by the network device is received; an amount of data in a buffer of the terminal exceeds a first threshold; an amount of data for a second target object in a buffer of the terminal exceeds a second threshold.

The first and second thresholds can be set by the terminal as needed or can be determined by the terminal based on configuration information from the network device. In the embodiment of this disclosure, the second target object includes one or more of the following: DRB, LCG, LCH, and PDU set.

The second indication information is used for indicating one or more of the following:
the network device is in a congested state; the terminal is to perform or activate PSI-based discarding, including discarding based on PDCP SDU and/or PDCP PDU and/or PDU set; the terminal is to use a PDCP discard timer duration corresponding to a congested state, wherein the PDCP discarding timer corresponding to the congested state is maintained for a target PDCP SDU, target PDCP PDU, or target PDU set. The target PDCP SDU can be any PDCP SDU, the target PDCP PDU can be any PDCP PDU, and the target PDU set can be any PDU set.

Specifically, a terminal can determine that a cell serving the terminal is in a congested state if one or more of the following conditions are met:
third indication information sent by the network device for the cell is received; an amount of data in a buffer of the terminal that needs to be transmitted using the cell exceeds a third threshold; an amount of data for a second target object in a buffer of the terminal that needs to be transmitted using the cell exceeds a fourth threshold.

The third and fourth thresholds can be set by the terminal as needed or can be determined by the terminal based on configuration information from the network device. In the embodiment of this disclosure, the second target object includes one or more of the following: DRB, LCG, LCH, PDU set.

The third indication information is used for indicating one or more of the following:
the cell is in a congested state; the terminal is to perform or activate PSI-based discarding in the cell, including discarding based on PDCP SDU and/or PDCP PDU and/or PDU set; the terminal is to use a PDCP discard timer duration corresponding to a congested state in the cell, wherein the PDCP discard timer corresponding to the congested state is maintained for a target PDCP SDU, target PDCP PDU, or target PDU set. The target PDCP PDU can be any PDCP PDU, and the target PDU set can be any PDU set.

One or more of the first indication information, the second indication information, and the third indication information are carried by one or more of the following signaling:
RRC signaling; MAC CE; physical layer signaling.

The first, second, or third indication information can also be used for indicating a PSI threshold. This PSI threshold is used by the terminal to determine which PDCP SDUs and/or PDCP PDUs and/or PDU sets corresponding to the PSI need to be discarded when performing or activating PSI-based discarding.

In the above embodiments, the cancelling the triggered DSR includes one or more of the following:
cancelling DSR triggered by a third target object; cancelling DSR including data of a third target object; cancelling all triggered DSRs.

The third target object includes one or more of the following:
a PDU set whose PSI value is lower than a preset PSI threshold; a PDCP SDU that the terminal needs to discard; a PDCP PDU that the terminal needs to discard; and a PDU set that the terminal needs to discard. The preset PSI threshold can be determined based on one or more of the first, second, and third indication information, or the preset PSI threshold can be determined based on configuration information.

Specifically, the DSR triggered by the third target object refers to: when the remaining running time of the PDCP discard timer corresponding to the third target object is less than or equal to the corresponding threshold, the terminal determines that a DSR needs to be triggered. The terminal can deem this DSR as a DSR triggered by the third target object. Alternatively, the terminal can determine whether the DSR is a DSR triggered by the third target object based on whether the data of the third target object is included in the DSR MAC CE. The terminal deems the DSR as a DSR triggered by the third target object if the data of the third target object is included in the DSR MAC CE.

The cancelling DSR including data of the third target object refers to: if a DSR MAC CE has been generated and contains data of the third target object, then the DSR is the DSR including data of the third target object and needs to be cancelled.

The stopping the PDCP discard timer includes one or more of the following:
stopping a PDCP discard timer corresponding to a PDCP SDU that the terminal needs to discard; stopping the PDCP discard timer corresponding to the PDCP PDU that the terminal needs to discard; stopping the PDCP discard timer corresponding to the PDU set that the terminal needs to discard.

In the embodiment of this disclosure, the terminal may, when the first condition is met, execute one or more of the following actions: canceling the triggered DSR, stopping the PDCP discard timer, and disabling DSR triggering, thereby reducing the amount of data to be sent uplink and alleviating network congestion.

In some embodiments, the terminal may also receive configuration information sent by the network device and determine whether to perform one or more of the following operations based on the configuration information: cancelling the triggered DSR, stopping the PDCP discard timer, or disabling DSR triggering. The configuration information may be carried by one or more signaling of RRC signaling, MAC CE, and physical layer signaling. For example, the configuration information may include indication on whether to cancel the triggered DSR and/or stop the PDCP discard timer and/or disable DSR triggering. If the configuration information includes indication as to cancelling the triggered DSR and/or stopping the PDCP discard timer and/or disabling DSR triggering, the terminal may determine to cancel the triggered DSR and/or stop the PDCP discard timer and/or disable DSR triggering. Otherwise, the terminal may determine not to cancel the triggered DSR and/or stop the PDCP discard timer and/or disable DSR triggering.

In some embodiments, the disabling DSR triggering includes one or more of the following:
disabling DSR triggering;
in a case that a remaining time corresponding to a fourth target object that the terminal needs to discard is less than or equal to a fifth threshold, disabling DSR triggering;
in a case that a remaining time corresponding to a fifth target object that the terminal has already discarded is less than or equal to a sixth threshold, disabling DSR triggering;
wherein the fourth target object or the fifth target object includes one or more of the following:
   PDCP SDU;
   PDCP PDU;
   PDU set.

When the fifth target object has been discarded, but the PDCP discard timer corresponding to the fifth target object is still running, the remaining time corresponding to the fifth target object can still be determined. Specifically, the remaining time can be determined based on the remaining running time of the PDCP discard timer corresponding to the fifth target object. For example, the remaining running time of the PDCP discard timer is equal to the difference between the duration of the PDCP discard timer and the elapsed time of the PDCP discard timer. The fifth and sixth thresholds can be set by the terminal as needed or can be determined by the terminal based on configuration from the network device.

In the above description, "needs to be discarded" can be understood as the action, step or operation of discarding not actually being performed at present, but rather it is determined that the action, step or operation of discarding needs to be performed. "already discarded" can be understood as the fourth target object having been discarded and being no longer in a buffer of the terminal.

In the embodiment of this disclosure, if it is determined that a discard operation needs to be performed on the first target object, and a remaining time corresponding to the first target object is less than or equal to a seventh threshold, DSR triggering is disabled.

The sixth threshold can be set by the terminal as needed or can be determined by the terminal based on configuration from the network device. The remaining time can be determined based on the remaining running time of the PDCP discard timer, which is equal to the difference between the duration of the PDCP discard timer and the elapsed time of the PDCP discard timer.

It should be noted that the triggered DSR includes a DSR that has already been triggered when the first condition is met and/or a DSR that is newly triggered after the first condition is met. Disabling DSR triggering can be understood as the terminal prohibiting triggering of DSR, or the terminal not allowing triggering of DSR.

Referring to Fig. 2, which is a flowchart of a congestion handling method according to an embodiment of this disclosure, the method is performed by a network device, and as shown in Fig. 2, includes:
step 201: sending configuration information and/or indication information to a terminal;
wherein the configuration information is used for configuring the terminal to perform one or more of the following operations when a first condition is met:
   cancelling a triggered DSR;
   stopping a PDCP discard timer;
   disabling DSR triggering;
   the indication information includes one or more of the following:
      first indication information;
      second indication information;
      third indication information.

The first indication information is used for indicating that the terminal is to perform or activate PSI-based discarding.

The second indication information is used for indicating one or more of the following:
the network device is in a congested state; the terminal is to perform or activate PSI-based discarding, including discarding based on PDCP SDU and/or PDCP PDU and/or PDU set; the terminal is to use a PDCP discard timer duration corresponding to a congested state, wherein a PDCP discarding timer corresponding to the congested state is maintained for a target PDCP SDU, target PDCP PDU, or target PDU set. The target PDCP SDU can be any PDCP SDU, the target PDCP PDU can be any PDCP PDU, and the target PDU set can be any PDU set.

The third indication information is used for indicating one or more of the following:
one or more cells serving the terminal are in a congested state; the terminal is to perform or activate PSI-based discarding in the cell, including discarding based on PDCP SDU and/or PDCP PDU and/or PDU set; the terminal is to use a PDCP discard timer duration corresponding to a congested state in the cell, where the PDCP discard timer corresponding to the congested state is maintained for a target PDCP SDU, target PDCP PDU, or target PDU set. The target PDCP PDU can be any PDCP PDU, and the target PDU set can be any PDU set.

One or more of the first indication information, the second indication information, and the third indication information are carried by one or more of the following signaling:
RRC signaling; MAC CE; physical layer signaling.

One or more of the first indication information, the second indication information, and the third indication information are further used for indicating a PSI threshold. The PSI threshold is used by the terminal to determine which PDCP SDUs and/or PDCP PDUs and/or PDU sets corresponding to the PSI need to be discarded when performing or activating PSI-based discarding.

In the embodiment of this disclosure, the terminal may, when the first condition is met, execute one or more of the following actions: canceling the triggered DSR, stopping the PDCP discard timer, and disabling DSR triggering, thereby reducing the amount of data to be sent uplink and alleviating network congestion.

In an embodiment of this disclosure, the terminal determines that the network is in a congested state, and the terminal cancels the triggered DSR and/or stops the PDCP discard timer and/or disables the triggering of DSR. As shown in Fig. 3, this process may include steps 301, 302 and 303.

Step 301: The terminal determines that a DSR has been triggered.

Specifically, the condition for triggering DSR includes: the remaining time for transmitting the PDCP SDU, PDCP PDU, or PDU set is less than or equal to a threshold configured by the network.

Step 302: The terminal determines that the network device or one or more cells serving the terminal are in a congested state.

The terminal determines that the network device is in a congested state when one of the following conditions is met:
1) the terminal has received second indication information from the network device, the second indication information being used for indicating one or more of the following:
   the network device is in a congested state;
   the terminal is to perform or activate PSI-based discarding;
   the terminal is to use a PDCP discard timer duration corresponding to a congested state, wherein a PDCP discard timer corresponding to the congested state is maintained for a target PDCP SDU, target PDCP PDU, or target PDU set;
2) an amount of data in a buffer of the terminal exceeds a first threshold;
3) an amount of data for a second target object in a buffer of the terminal exceeds a second threshold.

The terminal determines that a cell serving the terminal is in a congested state when one of the following conditions is met:
1) third indication information sent by the network device for the cell is received; the third indication information is used for indicating one or more of the following:
   the cell is in a congested state;
   the terminal is to perform or activate PSI-based discarding in the cell;
   the terminal is to use a PDCP discard timer duration corresponding to a congested state in the cell, wherein a PDCP discard timer corresponding to the congested state is maintained for a target PDCP SDU, target PDCP PDU, or target PDU set;
2) an amount of data in a buffer of the terminal that needs to be transmitted using the cell exceeds a third threshold;
3) an amount of data for a second target object in a buffer of the terminal that needs to be transmitted using the cell exceeds a fourth threshold.

The second target object includes one or more of the following: DRB, LCG, LCH, PDU set.

Specifically, the aforementioned indication information can be carried via RRC signaling, MAC CE, or physical layer signaling. In some embodiments, the indication information is further used for indicating a PSI threshold.

Step 303: The terminal performs one or more of the following operations: cancelling a triggered DSR, stopping a PDCP discard timer, and disabling DSR triggering.

When a terminal determines that a network device or a cell is in a congested state, the terminal performs one or more of the following operations: cancelling a triggered DSR, stopping a PDCP discard timer, and disabling DSR triggering.

Specifically, the terminal's cancelling the triggered DSR includes any of the following:
cancelling a DSR triggered by a third target object, wherein the third target object includes one or more of the following: a PDU set whose PSI value is lower than a preset PSI threshold; a PDCP SDU that the terminal needs to discard; a PDCP PDU that the terminal needs to discard; a PDU set that the terminal needs to discard.
cancelling a DSR including data of the third target object;
cancelling all triggered DSRs.

Specifically, the DSR triggered by the third target object refers to: the terminal determining that a DSR needs to be triggered when the remaining running time of the PDCP discard timer corresponding to the third target object is less than or equal to a corresponding threshold. The terminal can deem the DSR as the DSR triggered by the third target object. Alternatively, the terminal can determine whether the DSR is the DSR triggered by the third target object based on whether the data of the third target object is included in the DSR MAC CE. The terminal deems the DSR as a DSR triggered by the third target object if the data of the third target object is included in the DSR MAC CE.

Specifically, cancelling DSR including data of the third target object refers to: if a DSR MAC CE has been generated and contains data of the third target object, then the DSR needs to be cancelled.

The stopping the PDCP discard timer includes one or more of the following:
stopping a PDCP discard timer corresponding to the PDCP SDU that the terminal needs to discard;
stopping a PDCP discard timer corresponding to the PDCP PDU that the terminal needs to discard;
stopping a PDCP discard timer corresponding to the PDU set that the terminal needs to discard.

In some embodiments, the disabling DSR triggering includes one or more of the following:
disabling DSR triggering;
in a case that a remaining time corresponding to a fourth target object that the terminal needs to discard is less than or equal to a fifth threshold, disabling DSR triggering;
in a case that a remaining time corresponding to a fifth target object that the terminal has already discarded is less than or equal to a sixth threshold, disabling DSR triggering.

The fourth target object or the fifth target object includes one or more of the following:
PDCP SDU;
PDCP PDU;
PDU set.

When the fifth target object has been discarded, but the PDCP discard timer corresponding to the fifth target object is still running, the remaining time corresponding to the fifth target object can still be determined. Specifically, the remaining time can be determined based on the remaining running time of the PDCP discard timer corresponding to the fifth target object. For example, the remaining running time of the PDCP discard timer is equal to the difference between the duration of the PDCP discard timer and the elapsed time of the PDCP discard timer. The fifth and sixth thresholds can be set by the terminal as needed or can be determined by the terminal based on configuration from the network device.

Specifically, if the terminal determines that the network device or one or more cells serving the terminal are in a congested state, whether to execute step 303 depends on the configuration information received by the terminal from the network device. For example, if the configuration information indicates to execute step 303, then step 303 is executed; otherwise, step 303 is not executed. The configuration information may be RRC signaling, MAC CE, or physical layer signaling.

In some embodiments, the congestion control method may further include: if the terminal determines that the network device or one or more cells serving the terminal are in a congested state, the terminal needs to perform one or more of the following operations:
disabling DSR triggering;
in a case that a remaining time corresponding to a fourth target object that the terminal needs to discard is less than or equal to a fifth threshold, disabling DSR triggering;
in a case that a remaining time corresponding to a fifth target object that the terminal has already discarded is less than or equal to a sixth threshold, disabling DSR triggering;
wherein the fourth target object or the fifth target object includes one or more of the following:
   PDCP SDU;
   PDCP PDU;
   PDU set.

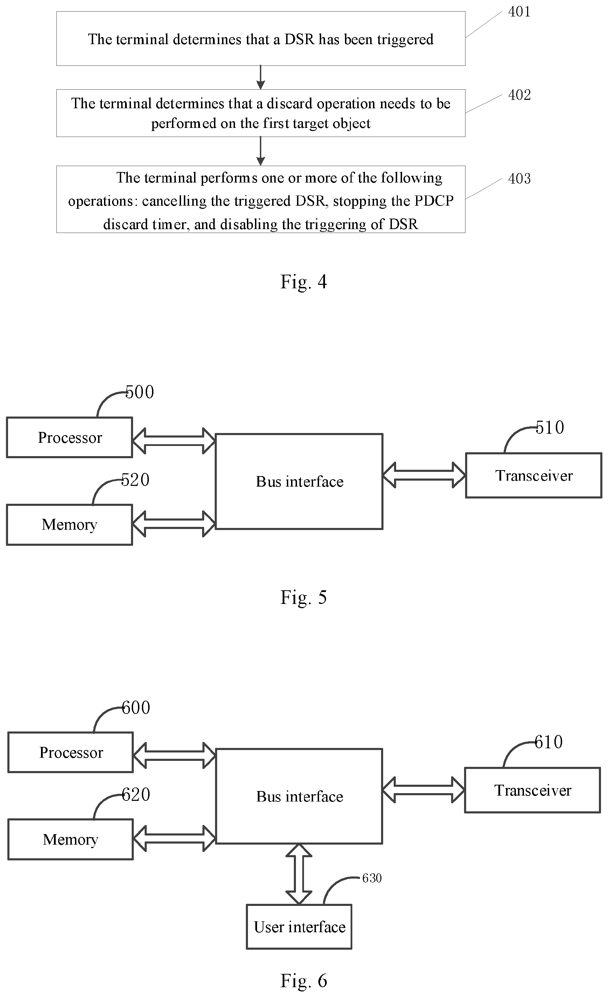

In an embodiment of this disclosure, the terminal determines that a discard operation needs to be performed on the first target object, and the terminal cancels the triggered DSR and/or stops the PDCP discard timer and/or disables the triggering of DSR. As shown in Fig. 4, this process may include steps 401, 402 and 403.

Step 401: The terminal determines that a DSR has been triggered.

Specifically, the condition for triggering DSR includes: the remaining time for transmitting the PDCP SDU, PDCP PDU, or PDU set is less than or equal to a threshold configured by the network.

Step 402: The terminal determines that a discard operation needs to be performed on the first target object.

The first target object can be a PDCP SDU, PDCP PDU, or PDU set. Specifically, the reason why the terminal needs to perform a discard operation on the first target object may be: network device congestion, network device instructing the terminal to perform PSI-based discarding, or the PDCP discard timer corresponding to the PDCP SDU, PDCP PDU, or PDU set expires, etc.

Step 403: The terminal performs one or more of the following operations: cancelling the triggered DSR, stopping the PDCP discard timer, and disabling the triggering of DSR.

When the terminal determines that a discard operation needs to be performed on the first target object, the terminal cancels the delay status reporting (DSR) triggered by the first target object and/or stops the PDCP discard timer and/or disables the triggering of DSR.

Specifically, the DSR triggered by the first target object refers to: the terminal determining that a DSR needs to be triggered when the remaining time of the PDCP discard timer corresponding to the first target object is less than or equal to a corresponding threshold. The terminal can deem the DSR as the DSR triggered by the first target object. Alternatively, the terminal can also determine whether the DSR is the DSR triggered by the first target object based on whether the data of the first target object is included in the DSR MAC CE. The terminal deems the DSR as a DSR triggered by the first target object if the data of the first target object is included in the DSR MAC CE.

The stopping the PDCP discard timer includes one or more of the following:
stopping a PDCP discard timer corresponding to the PDCP SDU that the terminal needs to discard;
stopping a PDCP discard timer corresponding to the PDCP PDU that the terminal needs to discard;
stopping a PDCP discard timer corresponding to the PDU set that the terminal needs to discard.

In some embodiments, the disabling DSR triggering includes one or more of the following:
disabling DSR triggering;
in a case that a remaining time corresponding to a fourth target object that the terminal needs to discard is less than or equal to a fifth threshold, disabling DSR triggering;
in a case that a remaining time corresponding to a fifth target object that the terminal has already discarded is less than or equal to a sixth threshold, disabling DSR triggering;
wherein the fourth target object or the fifth target object includes one or more of the following:
   PDCP SDU;
   PDCP PDU;
   PDU set.

When the fifth target object has been discarded, but the PDCP discard timer corresponding to the fifth target object is still running, the remaining time corresponding to the fifth target object can still be determined. Specifically, the remaining time can be determined based on the remaining running time of the PDCP discard timer corresponding to the fifth target object. For example, the remaining running time of the PDCP discard timer is equal to the difference between the duration of the PDCP discard timer and the elapsed time of the PDCP discard timer. The fifth and sixth thresholds can be set by the terminal as needed or can be determined by the terminal based on configuration from the network device.

In some embodiments, the congestion control method may further include: disabling DSR triggering if the remaining time corresponding to the first target object is less than or equal to a threshold. Specifically, if the remaining running time of the PDCP discard timer corresponding to the first target object is less than or equal to a threshold, DSR triggering is disabled;

As can be seen from the above description, the terminal can perform one or more of the following operations in a timely manner: cancelling the triggered DSR, stopping the PDCP discard timer, and disabling the triggering of DSR, thereby reducing the amount of data to be sent uplink and alleviating network congestion.

The technical solutions provided in the embodiments of this disclosure are applicable to a variety of systems, especially 5G systems. For example, applicable systems may include global system for mobile communication (GSM) system, code division multiple access (CDMA) system, wideband code division multiple access (WCDMA), general packet radio service (GPRS) system, Long Term Evolution (LTE) system, LTE frequency division duplex (FDD) system, LTE time division duplex (TDD) system, Long Term Evolution Advanced (LTE-A) system, universal mobile telecommunications system (UMTS), worldwide interoperability for microwave access (WiMAX) system, 5G New Radio (NR) system and the like. All of these systems include terminal device and network device. The systems may also include a core network portion, such as Evolved Packet System (EPS) and 5G system (5GS).

The terminal device involved in the embodiments of this disclosure can be devices that provide voice and/or data connectivity to users, handheld devices with wireless connectivity, or other processing devices connected to a wireless modem. The names of the terminal devices may differ in different systems; for example, in a 5G system, a terminal device can be called User Equipment (UE). Wireless terminal devices can communicate with one or more core networks (CNs) via a radio access network (RAN). Wireless terminal devices can be mobile terminal devices, such as mobile phones (or "cellular" phones) and computers with mobile terminal devices, for example, portable, pocket-sized, handheld, computer-embedded, or vehicle-mounted mobile devices that exchange voice and/or data with the RAN. Examples include Personal Communication Service (PCS) phones, cordless phones, Session Initiated Protocol (SIP) phones, Wireless Local Loop (WLL) stations, and Personal Digital Assistants (PDAs). Wireless terminal device can also be referred to as a system, subscriber unit, subscriber station, mobile station, mobile, remote station, access point, remote terminal, access terminal, user terminal, user agent, or user device, but this is not limited to these terms in the embodiments disclosed herein.

The network device involved in the embodiments of this disclosure may be a base station, which may include multiple cells providing services to terminals. Depending on the specific application, the base station may also be called an access point, or a device in the access network that communicates with the wireless terminal device through one or more sectors on the air interface, or other names. The network device may be used to exchange received air frames with Internet Protocol (IP) packets, acting as a router between the wireless terminal device and the rest of the access network, which may include an Internet Protocol (IP) communication network. The network device may also coordinate the attribute management of the air interface. For example, the network device involved in this disclosure can be a base transceiver station (BTS) in a global system for mobile communications (GSM) or code division multiple access (CDMA) system, a NodeB in a wide-band code division multiple access (WCDMA) system, an evolved Node B (eNB or e-NodeB) in a long term evolution (LTE) system, a 5G base station (gNB) in a next generation system, a Home evolved Node B (HeNB), a relay node, a femto, a pico, etc., and is not limited in this disclosure. In some network structures, the network device may include centralized unit (CU) nodes and distributed unit (DU) nodes, and the centralized unit and distributed unit may be geographically separated.

Network devices and terminal devices can each use one or more antennas for multiple input multiple output (MIMO) transmission. MIMO transmission can be single user MIMO (SU-MIMO) or multiple user MIMO (MU-MIMO). Depending on the form and number of antenna combinations, MIMO transmission can be two-dimensional MIMO (2D-MIMO), three-dimensional MIMO (3D-MIMO), full-dimensional MIMO (FD-MIMO), or massive-MIMO. It can also be diversity transmission, pre-coded transmission, or beamforming transmission, etc.

As shown in Fig. 5, a congestion handling apparatus according to an embodiment of this disclosure is applied to a network device, and includes: a processor 500, used for reading a program from a memory 520 and performing the following step:
sending configuration information and/or indication information to a terminal;
wherein the configuration information is used for configuring the terminal to perform one or more of the following operations when a first condition is met:
   cancelling a triggered DSR;
   stopping a PDCP discard timer;
   disabling DSR triggering;
   the indication information includes one or more of the following:
      first indication information;
      second indication information;
      third indication information;
      a transceiver 510, used for receiving and sending data under the control of the processor 500.

In Fig. 5, the bus architecture may include any number of interconnected buses and bridges, specifically linking various circuits of one or more processors represented by processor 500 and memory represented by memory 520. The bus architecture may also link various other circuits such as peripheral devices, voltage regulators, and power management circuits, which are well known in the art and therefore will not be described further herein. The bus interface provides an interface. Transceiver 510 may be multiple elements, including a transmitter and a receiver, providing a unit for communicating with various other devices over a transmission medium. Processor 500 is responsible for managing the bus architecture and general processing, and memory 520 may store data used by processor 500 during operation.

The processor 500 can be a central processing unit (CPU), an application-specific integrated circuit (ASIC), a field-programmable gate array (FPGA), or a complex programmable logic device (CPLD). The processor can also adopt a multi-core architecture.

The processor 500 is responsible for managing the bus architecture and general processing, while the memory 520 can store the data used by the processor 500 when performing operations.

In some embodiments, the first indication information is used for indicating that the terminal is to perform or activate PSI-based discarding.

In some embodiments, the second indication information is used for indicating one or more of the following:
the network device is in a congested state;
the terminal is to perform or activate PSI-based discarding;
the terminal is to use a PDCP discard timer duration corresponding to a congested state, wherein a PDCP discard timer corresponding to the congested state is maintained for a target PDCP SDU, target PDCP PDU, or target PDU set.

In some embodiments, the third indication information is used for indicating one or more of the following:
one or more cells serving the terminal are in a congested state;
the terminal is to perform or activate PSI-based discarding in the cell;
the terminal is to use a PDCP discard timer duration corresponding to a congested state in the cell, wherein a PDCP discard timer corresponding to the congested state is maintained for a target PDCP SDU, target PDCP PDU, or target PDU set.

In some embodiments, one or more of the first indication information, the second indication information, and the third indication information are carried by one or more of the following signaling:
RRC signaling;
MAC CE;
physical layer signaling.

In some embodiments, one or more of the first indication information, the second indication information, and the third indication information are further used for indicating a PSI threshold.

It should be noted that the apparatus provided in this embodiment can implement all the method steps implemented in the above method embodiment and achieve the same technical effect. Therefore, the parts and beneficial effects that are the same as those in the method embodiment will not be described in detail here.

As shown in Fig. 6, a congestion handling apparatus according to an embodiment of this disclosure is applied to a terminal, and includes: a processor 600, used for reading a program from a memory 620 and performing the following step:
when a first condition is met, performing one or more of the following operations:
cancelling a triggered DSR;
stopping a PDCP discard timer;
disabling DSR triggering;
a transceiver 610, used for receiving and sending data under the control of the processor 600.

In Fig. 6, the bus architecture may include any number of interconnected buses and bridges, specifically linking various circuits of one or more processors represented by processor 600 and memory represented by memory 620. The bus architecture may also link various other circuits such as peripheral devices, voltage regulators, and power management circuits, which are well known in the art and therefore will not be described further herein. The bus interface provides an interface. Transceiver 610 may be multiple elements, including a transmitter and a receiver, providing a unit for communicating with various other devices over a transmission medium. For different user equipment, the user interface 630 may also be an interface capable of connecting external or internal devices, including but not limited to keypads, displays, speakers, microphones, joysticks, etc.

The processor 600 is responsible for managing the bus architecture and general processing, while the memory 620 can store the data used by the processor 600 when performing operations.

The processor 600 can be a central processing unit (CPU), an application-specific integrated circuit (ASIC), a field-programmable gate array (FPGA), or a complex programmable logic device (CPLD). The processor can also adopt a multi-core architecture.

By invoking a computer program stored in memory, the processor executes any of the methods described in the embodiments of this disclosure according to the obtained executable instructions. The processor and the memory may also be physically separated.

In some embodiments, the first condition includes one or more of the following:
it is determined that a network device serving the terminal is in a congested state;
it is determined that one or more cells serving the terminal are in a congested state;
first indication information sent by a network device is received;
it is determined that a discard operation needs to be performed on a first target object;
wherein the first indication information is used for indicating that the terminal is to perform or activate protocol data unit set importance (PSI)-based discarding;
the first target object includes one or more of the following: PDCP SDU, PDCP PDU, PDU set.

In some embodiments, it is determined that the network device serving the terminal is in the congested state in a case that one or more of the following conditions are met:
second indication information sent by the network device is received;
an amount of data in a buffer of the terminal exceeds a first threshold;
an amount of data for a second target object in a buffer of the terminal exceeds a second threshold.

In some embodiments, the second indication information is used for indicating one or more of the following:
the network device is in a congested state;
the terminal is to perform or activate PSI-based discarding;
the terminal is to use a PDCP discard timer duration corresponding to a congested state, wherein a PDCP discard timer corresponding to the congested state is maintained for a target PDCP SDU, target PDCP PDU, or target PDU set.

In some embodiments, it is determined that a cell serving the terminal is in the congested state in a case that one or more of the following conditions are met:
third indication information sent by the network device for the cell is received;
an amount of data in a buffer of the terminal that needs to be transmitted using the cell exceeds a third threshold;
an amount of data for a second target object in a buffer of the terminal that needs to be transmitted using the cell exceeds a fourth threshold.

In some embodiments, the third indication information is used for indicating one or more of the following:
the cell is in a congested state;
the terminal is to perform or activate PSI-based discarding in the cell;
the terminal is to use a PDCP discard timer duration corresponding to a congested state in the cell, wherein a PDCP discard timer corresponding to the congested state is maintained for a target PDCP SDU, target PDCP PDU, or target PDU set.

In some embodiments, the second target object includes one or more of the following:
data radio bearer (DRB), logical channel group (LCG), logical channel (LCH), PDU set.

In some embodiments, one or more of the first indication information, the second indication information, and the third indication information are carried by one or more of the following signaling:
RRC signaling;
MAC CE;
physical layer signaling.

In some embodiments, one or more of the first indication information, the second indication information, and the third indication information are further used for indicating a PSI threshold.

In some embodiments, the cancelling the triggered DSR includes one or more of the following:
cancelling a DSR triggered by a third target object;
cancelling a DSR including data of the third target object;
cancelling all triggered DSRs;
wherein the third target object includes one or more of the following:
   a PDU set whose PSI value is lower than a preset PSI threshold;
   a PDCP SDU that the terminal needs to discard;
   a PDCP PDU that the terminal needs to discard;
   a PDU set that the terminal needs to discard.

In some embodiments, the stopping the PDCP discard timer includes one or more of the following:
stopping a PDCP discard timer corresponding to a PDCP SDU that the terminal needs to discard;
stopping a PDCP discard timer corresponding to a PDCP PDU that the terminal needs to discard;
stopping a PDCP discard timer corresponding to a PDU set that the terminal needs to discard.

In some embodiments, the processor 600 is further used for reading the computer program from the memory and performing the following steps:
receiving configuration information sent by a network device; and
determining, based on the configuration information, whether to perform one or more of the following operations: cancelling the triggered DSR, stopping the PDCP discard timer, and disabling DSR triggering.

In some embodiments, the processor 600 is further used for reading the computer program from the memory and performing one or more of the following:
disabling DSR triggering;
in a case that a remaining time corresponding to a fourth target object that the terminal needs to discard is less than or equal to a fifth threshold, disabling DSR triggering;
in a case that a remaining time corresponding to a fifth target object that the terminal has already discarded is less than or equal to a sixth threshold, disabling DSR triggering;
wherein the fourth target object or the fifth target object includes one or more of the following:
   PDCP SDU;
   PDCP PDU;
   PDU set.

In some embodiments, the processor 600 is further used for reading the computer program from the memory and performing the following step:
in a case that it is determined that the discard operation needs to be performed on the first target object, and a remaining time corresponding to the first target object is less than or equal to a seventh threshold, disabling DSR triggering;

It should be noted that the apparatus provided in this embodiment can implement all the method steps implemented in the above method embodiment and can achieve the same technical effect. Therefore, the parts and beneficial effects that are the same as those in the method embodiment will not be described in detail here.

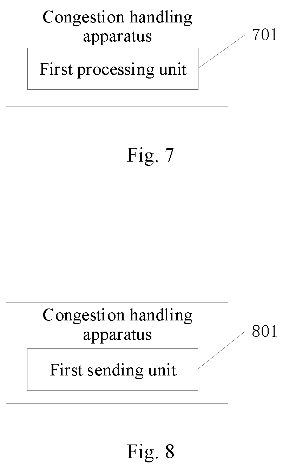

As shown in Fig. 7, a congestion handling apparatus according to an embodiment of this disclosure is applied to a terminal and includes:
a first processing unit 701, configured to perform one or more of the following operations when a first condition is met:
cancelling a triggered DSR;
stopping a PDCP discard timer;
disabling DSR triggering.

In some embodiments, the first condition includes one or more of the following:
it is determined that a network device serving the terminal is in a congested state;
it is determined that one or more cells serving the terminal are in a congested state;
first indication information sent by a network device is received;
it is determined that a discard operation needs to be performed on a first target object;
wherein the first indication information is used for indicating that the terminal is to perform or activate protocol data unit set importance (PSI)-based discarding;
the first target object includes one or more of the following: PDCP SDU, PDCP PDU, PDU set.

In some embodiments, it is determined that the network device serving the terminal is in the congested state in a case that one or more of the following conditions are met:
second indication information sent by the network device is received;
an amount of data in a buffer of the terminal exceeds a first threshold;
an amount of data for a second target object in a buffer of the terminal exceeds a second threshold.

In some embodiments, the second indication information is used for indicating one or more of the following:
the network device is in a congested state;
the terminal is to perform or activate PSI-based discarding;
the terminal is to use a PDCP discard timer duration corresponding to a congested state, wherein a PDCP discard timer corresponding to the congested state is maintained for a target PDCP SDU, target PDCP PDU, or target PDU set.

In some embodiments, it is determined that a cell serving the terminal is in the congested state in a case that one or more of the following conditions are met:
third indication information sent by the network device for the cell is received;
an amount of data in a buffer of the terminal that needs to be transmitted using the cell exceeds a third threshold;
an amount of data for a second target object in a buffer of the terminal that needs to be transmitted using the cell exceeds a fourth threshold.

In some embodiments, the third indication information is used for indicating one or more of the following:
the cell is in a congested state;
the terminal is to perform or activate PSI-based discarding in the cell;
the terminal is to use a PDCP discard timer duration corresponding to a congested state in the cell, wherein a PDCP discard timer corresponding to the congested state is maintained for a target PDCP SDU, target PDCP PDU, or target PDU set.

In some embodiments, the second target object includes one or more of the following:
data radio bearer (DRB), logical channel group (LCG), logical channel (LCH), PDU set.

In some embodiments, one or more of the first indication information, the second indication information, and the third indication information are carried by one or more of the following signaling:
RRC signaling;
MAC CE;
physical layer signaling.

In some embodiments, one or more of the first indication information, the second indication information, and the third indication information are further used for indicating a PSI threshold.

In some embodiments, the cancelling the triggered DSR includes one or more of the following:
cancelling a DSR triggered by a third target object;
cancelling a DSR including data of the third target object;
cancelling all triggered DSRs;
wherein the third target object includes one or more of the following:
   a PDU set whose PSI value is lower than a preset PSI threshold;
   a PDCP SDU that the terminal needs to discard;
   a PDCP PDU that the terminal needs to discard;
   a PDU set that the terminal needs to discard.

In some embodiments, the stopping the PDCP discard timer includes one or more of the following:
stopping a PDCP discard timer corresponding to a PDCP SDU that the terminal needs to discard;
stopping a PDCP discard timer corresponding to a PDCP PDU that the terminal needs to discard;
stopping a PDCP discard timer corresponding to a PDU set that the terminal needs to discard.

In some embodiments, the apparatus may further include:
a first receiving unit, configured to receive configuration information sent by the network device;
wherein the first processing unit is further configured to determine, based on the configuration information, whether to perform one or more of the following operations: cancelling the triggered DSR, stopping the PDCP discard timer, and disabling DSR triggering.

In some embodiments, the first processing unit is further configured to perform one or more of the following:
disabling DSR triggering;
in a case that a remaining time corresponding to a fourth target object that the terminal needs to discard is less than or equal to a fifth threshold, disabling DSR triggering;
in a case that a remaining time corresponding to a fifth target object that the terminal has already discarded is less than or equal to a sixth threshold, disabling DSR triggering;
wherein the fourth target object or the fifth target object includes one or more of the following:
   PDCP SDU;
   PDCP PDU;
   PDU set.

In some embodiments, the apparatus may further include:
a third processing unit, configured to, in a case that it is determined that the discard operation needs to be performed on the first target object, and a remaining time corresponding to the first target object is less than or equal to a seventh threshold, disable DSR triggering.

It should be noted that the apparatus provided in this embodiment can implement all the method steps implemented in the above method embodiment and can achieve the same technical effect. Therefore, the parts and beneficial effects that are the same as those in the method embodiment will not be described in detail here.

As shown in Fig. 8, a congestion handling apparatus according to an embodiment of this disclosure is applied to a network device and includes:
a first sending unit 801, configured to send configuration information and/or indication information to a terminal;
wherein the configuration information is used for configuring the terminal to perform one or more of the following operations when a first condition is met:
   cancelling a triggered DSR;
   stopping a PDCP discard timer;
   disabling DSR triggering;
   the indication information includes one or more of the following:
      first indication information;
      second indication information;
      third indication information.

In some embodiments, the first indication information is used for indicating that the terminal is to perform or activate PSI-based discarding.

In some embodiments, the second indication information is used for indicating one or more of the following:
the network device is in a congested state;
the terminal is to perform or activate PSI-based discarding;
the terminal is to use a PDCP discard timer duration corresponding to a congested state, wherein a PDCP discard timer corresponding to the congested state is maintained for a target PDCP SDU, target PDCP PDU, or target PDU set.

In some embodiments, the third indication information is used for indicating one or more of the following:
one or more cells serving the terminal are in a congested state;
the terminal is to perform or activate PSI-based discarding in the cell;
the terminal is to use a PDCP discard timer duration corresponding to a congested state in the cell, wherein a PDCP discard timer corresponding to the congested state is maintained for a target PDCP SDU, target PDCP PDU, or target PDU set.

In some embodiments, one or more of the first indication information, the second indication information, and the third indication information are carried by one or more of the following signaling:
RRC signaling;
MAC CE;
physical layer signaling.

In some embodiments, one or more of the first indication information, the second indication information, and the third indication information are further used for indicating a PSI threshold.

It should be noted that the apparatus provided in this embodiment can implement all the method steps implemented in the above method embodiment and can achieve the same technical effect. Therefore, the parts and beneficial effects that are the same as those in the method embodiment will not be described in detail here.

It should be noted that the division of units in the embodiments of this disclosure is illustrative and only represents one logical functional division. In actual implementation, other division methods may be used. Furthermore, the functional units in the various embodiments of this disclosure can be integrated into one processing unit, or each unit can exist physically separately, or two or more units can be integrated into one unit. The integrated units described above can be implemented in hardware or as software functional units.

If the integrated unit is implemented as a software functional unit and sold or used as an independent product, it can be stored in a processor-readable storage medium. Based on this understanding, the technical solution of this disclosure, in essence, or the part that contributes to related technologies, or all or part of the technical solution, can be embodied in the form of a software product. This computer software product is stored in a storage medium and includes several instructions to cause a computer device (which may be a personal computer, server, or network device, etc.) or processor to execute all or part of the steps of the methods described in the various embodiments of this disclosure. The aforementioned storage medium includes various media capable of storing program code, such as USB flash drives, portable hard drives, read-only memory (ROM), random access memory (RAM), magnetic disks, or optical discs.

An embodiment of this disclosure also provides a communication device, including: a memory, a processor, and a program stored in the memory and executable by the processor, wherein the processor executes the program to implement the steps in the congestion handling method described above.

An embodiment of this disclosure also provides a processor-readable storage medium storing a program. When executed by a processor, this program implements the various processes of the above-described congestion handling method embodiments and achieves the same technical effects. To avoid repetition, details are omitted here. The readable storage medium can be any available medium or data storage device accessible by the processor, including but not limited to magnetic storage (e.g., floppy disks, hard disks, magnetic tapes, magneto-optical (MO) discs), optical storage (e.g., compact discs (CDs), digital versatile discs (DVDs), Blu-ray discs (BD), high-definition versatile discs (HVD)), and semiconductor storage (e.g., ROMs, erasable programmable read-only memory (EPROM), electrically erasable programmable read-only memory (EEPROM), non-volatile memory (NAND flash), solid-state drives (SSDs)).

It should be noted that, the terms "including", "comprising" or any other variations thereof used herein are intended to cover non-exclusive inclusion, such that a process, method, article, or apparatus that includes a list of elements includes not only those elements but also other elements not expressly listed, or elements inherent in such a process, method, article, or apparatus. Unless otherwise specified, an element defined by the phrase "including one..." does not exclude the presence of additional identical elements in the process, method, article, or apparatus that includes the element.

Through the above description of the embodiments, those skilled in the art can clearly understand that the methods of the above embodiments can be implemented by means of software plus necessary general-purpose hardware platforms. Of course, they can also be implemented by hardware, but in many cases the former is a better implementation method. Based on this understanding, the technical solution of this disclosure, in essence, or the part that contributes to the related technology, can be embodied in the form of a software product. This computer software product is stored in a storage medium (such as ROM/RAM, magnetic disk, optical disc) and includes several instructions to cause a terminal (which may be a mobile phone, computer, server, air conditioner, or network device, etc.) to execute the methods described in the various embodiments of this disclosure.

The embodiments of this disclosure have been described above with reference to the accompanying drawings. However, this disclosure is not limited to the specific embodiments described above. The specific embodiments described above are merely illustrative and not restrictive. Those skilled in the art can make many other forms under the guidance of this disclosure without departing from the spirit and scope of the claims, and all of these forms are within the scope of this disclosure.

## Claims

1. A congestion handling method, performed by a terminal, comprising:
when a first condition is met, performing one or more of the following operations:
cancelling a triggered delay status reporting (DSR);
stopping a packet data convergence protocol (PDCP) discard timer;
disabling DSR triggering.

2. The method according to claim 1, wherein the first condition comprises one or more of the following:
it is determined that a network device serving the terminal is in a congested state;
it is determined that one or more cells serving the terminal are in a congested state;
first indication information sent by a network device is received;
it is determined that a discard operation needs to be performed on a first target object;
wherein the first indication information is used for indicating that the terminal is to perform or activate protocol data unit set importance (PSI)-based discarding;
the first target object comprises one or more of the following: packet data convergence protocol service data unit (PDCP SDU), packet data convergence protocol protocol data unit (PDCP PDU), and protocol data unit set (PDU set).

3. The method according to claim 2, wherein it is determined that the network device serving the terminal is in the congested state in a case that one or more of the following conditions are met:
second indication information sent by the network device is received;
an amount of data in a buffer of the terminal exceeds a first threshold;
an amount of data for a second target object in a buffer of the terminal exceeds a second threshold.

4. The method according to claim 3, wherein the second indication information is used for indicating one or more of the following:
the network device is in a congested state;
the terminal is to perform or activate PSI-based discarding;
the terminal is to use a PDCP discard timer duration corresponding to a congested state, wherein a PDCP discard timer corresponding to the congested state is maintained for a target PDCP SDU, target PDCP PDU, or target PDU set.

5. The method according to claim 2, wherein it is determined that a cell serving the terminal is in the congested state in a case that one or more of the following conditions are met:
third indication information sent by the network device for the cell is received;
an amount of data in a buffer of the terminal that needs to be transmitted using the cell exceeds a third threshold;
an amount of data for a second target object in a buffer of the terminal that needs to be transmitted using the cell exceeds a fourth threshold.

6. The method according to claim 5, wherein the third indication information is used for indicating one or more of the following:
the cell is in a congested state;
the terminal is to perform or activate PSI-based discarding in the cell;
the terminal is to use a PDCP discard timer duration corresponding to a congested state in the cell, wherein a PDCP discard timer corresponding to the congested state is maintained for a target PDCP SDU, target PDCP PDU, or target PDU set.

7. The method according to any one of claims 3 to 6, wherein the second target object comprises one or more of the following:
data radio bearer (DRB), logical channel group (LCG), logical channel (LCH), PDU set.

8. The method according to any one of claims 3 to 6, wherein one or more of the first indication information, the second indication information, and the third indication information are carried by one or more of the following signaling:
radio resource control (RRC) signaling;
medium access control control element (MAC CE);
physical layer signaling.

9. The method according to any one of claims 3 to 6, wherein one or more of the first indication information, the second indication information, and the third indication information are further used for indicating a PSI threshold.

10. The method according to claim 1, wherein the cancelling the triggered DSR comprises one or more of the following:
cancelling a DSR triggered by a third target object;
cancelling a DSR comprising data of the third target object;
cancelling all triggered DSRs;
wherein the third target object comprises one or more of the following:
a PDU set whose PSI value is lower than a preset PSI threshold;
a PDCP SDU that the terminal needs to discard;
a PDCP PDU that the terminal needs to discard;
a PDU set that the terminal needs to discard.

11. The method according to claim 1, wherein the stopping the PDCP discard timer comprises one or more of the following:
stopping a PDCP discard timer corresponding to a PDCP SDU that the terminal needs to discard;
stopping a PDCP discard timer corresponding to a PDCP PDU that the terminal needs to discard;
stopping a PDCP discard timer corresponding to a PDU set that the terminal needs to discard.

12. The method according to claim 1, wherein the disabling DSR triggering comprises one or more of the following:
disabling DSR triggering;
in a case that a remaining time corresponding to a fourth target object that the terminal needs to discard is less than or equal to a fifth threshold, disabling DSR triggering;
in a case that a remaining time corresponding to a fifth target object that the terminal has already discarded is less than or equal to a sixth threshold, disabling DSR triggering;
wherein the fourth target object or the fifth target object comprises one or more of the following:
PDCP SDU;
PDCP PDU;
PDU set.

13. The method according to claim 2, further comprising:
in a case that it is determined that the discard operation needs to be performed on the first target object, and a remaining time corresponding to the first target object is less than or equal to a seventh threshold, disabling DSR triggering;

14. The method according to claim 1, further comprising:
receiving configuration information sent by a network device; and
determining, based on the configuration information, whether to perform one or more of the following operations: cancelling the triggered DSR, stopping the PDCP discard timer, and disabling DSR triggering.

15. A congestion handling method, performed by a network device, comprising:
sending configuration information and/or indication information to a terminal;
wherein the configuration information is used for configuring the terminal to perform one or more of the following operations when a first condition is met:
cancelling a triggered DSR;
stopping a PDCP discard timer;
disabling DSR triggering;
the indication information comprises one or more of the following:
first indication information;
second indication information;
third indication information.

16. The method according to claim 15, wherein the first indication information is used for indicating that the terminal is to perform or activate PSI-based discarding.

17. The method according to claim 15, wherein the second indication information is used for indicating one or more of the following:
the network device is in a congested state;
the terminal is to perform or activate PSI-based discarding;
the terminal is to use a PDCP discard timer duration corresponding to a congested state, wherein a PDCP discard timer corresponding to the congested state is maintained for a target PDCP SDU, target PDCP PDU, or target PDU set.

18. The method according to claim 15, wherein the third indication information is used for indicating one or more of the following:
one or more cells serving the terminal are in a congested state;
the terminal is to perform or activate PSI-based discarding in the cell;
the terminal is to use a PDCP discard timer duration corresponding to a congested state in the cell, wherein a PDCP discard timer corresponding to the congested state is maintained for a target PDCP SDU, target PDCP PDU, or target PDU set.

19. The method according to any one of claims 15 to 18, wherein one or more of the first indication information, the second indication information, and the third indication information are carried by one or more of the following signaling:
RRC signaling;
MAC CE;
physical layer signaling.

20. The method according to any one of claims 15 to 18, wherein one or more of the first indication information, the second indication information, and the third indication information are further used for indicating a PSI threshold.

21. A congestion handling apparatus, applied to a terminal, comprising: a memory, a transceiver, and a processor;
wherein the memory is used for storing a computer program; the transceiver is used for sending and receiving data under the control of the processor; and the processor is used for reading the computer program from the memory and performing the following step:
when a first condition is met, performing one or more of the following operations:
cancelling a triggered DSR;
stopping a PDCP discard timer;
disabling DSR triggering.

22. The apparatus according to claim 21, wherein the first condition comprises one or more of the following:
it is determined that a network device serving the terminal is in a congested state;
it is determined that one or more cells serving the terminal are in a congested state;
first indication information sent by a network device is received;
it is determined that a discard operation needs to be performed on a first target object;
wherein the first indication information is used for indicating that the terminal is to perform or activate protocol data unit set importance (PSI)-based discarding;
the first target object comprises one or more of the following: PDCP SDU, PDCP PDU, PDU set.

23. The apparatus according to claim 22, wherein,
it is determined that the network device serving the terminal is in the congested state in a case that one or more of the following conditions are met:
second indication information sent by the network device is received;
an amount of data in a buffer of the terminal exceeds a first threshold;
an amount of data for a second target object in a buffer of the terminal exceeds a second threshold.

24. The apparatus according to claim 23, wherein the second indication information is used for indicating one or more of the following:
the network device is in a congested state;
the terminal is to perform or activate PSI-based discarding;
the terminal is to use a PDCP discard timer duration corresponding to a congested state, wherein a PDCP discard timer corresponding to the congested state is maintained for a target PDCP SDU, target PDCP PDU, or target PDU set.

25. The apparatus according to claim 22, wherein it is determined that a cell serving the terminal is in the congested state in a case that one or more of the following conditions are met:
third indication information sent by the network device for the cell is received;
an amount of data in a buffer of the terminal that needs to be transmitted using the cell exceeds a third threshold;
an amount of data for a second target object in a buffer of the terminal that needs to be transmitted using the cell exceeds a fourth threshold.

26. The apparatus according to claim 25, wherein the third indication information is used for indicating one or more of the following:
the cell is in a congested state;
the terminal is to perform or activate PSI-based discarding in the cell;
the terminal is to use a PDCP discard timer duration corresponding to a congested state in the cell, wherein a PDCP discard timer corresponding to the congested state is maintained for a target PDCP SDU, target PDCP PDU, or target PDU set.

27. The apparatus according to any one of claims 23 to 26, wherein the second target object comprises one or more of the following:
data radio bearer (DRB), logical channel group (LCG), logical channel (LCH), PDU set.

28. The apparatus according to any one of claims 23 to 26, wherein one or more of the first indication information, the second indication information, and the third indication information are carried by one or more of the following signaling:
RRC signaling;
MAC CE;
physical layer signaling.

29. The apparatus according to any one of claims 23 to 26, wherein one or more of the first indication information, the second indication information, and the third indication information are further used for indicating a PSI threshold.

30. The apparatus according to claim 21, wherein the cancelling the triggered DSR comprises one or more of the following:
cancelling a DSR triggered by a third target object;
cancelling a DSR comprising data of the third target object;
cancelling all triggered DSRs;
wherein the third target object comprises one or more of the following:
a PDU set whose PSI value is lower than a preset PSI threshold;
a PDCP SDU that the terminal needs to discard;
a PDCP PDU that the terminal needs to discard;
a PDU set that the terminal needs to discard.

31. The apparatus according to claim 21, wherein the stopping the PDCP discard timer comprises one or more of the following:
stopping a PDCP discard timer corresponding to a PDCP SDU that the terminal needs to discard;
stopping a PDCP discard timer corresponding to a PDCP PDU that the terminal needs to discard;
stopping a PDCP discard timer corresponding to a PDU set that the terminal needs to discard.

32. The apparatus according to claim 21, wherein the processor is further used for reading the computer program from the memory and performing one or more of the following steps:
disabling DSR triggering;
in a case that a remaining time corresponding to a fourth target object that the terminal needs to discard is less than or equal to a fifth threshold, disabling DSR triggering;
in a case that a remaining time corresponding to a fifth target object that the terminal has already discarded is less than or equal to a sixth threshold, disabling DSR triggering;
wherein the fourth target object or the fifth target object comprises one or more of the following:
PDCP SDU;
PDCP PDU;
PDU set.

33. The apparatus according to claim 22, wherein the processor is further used for reading the computer program from the memory and performing the following step:
in a case that it is determined that the discard operation needs to be performed on the first target object, and a remaining time corresponding to the first target object is less than or equal to a seventh threshold, disabling DSR triggering;

34. The apparatus according to claim 21, wherein the processor is further used for reading the computer program from the memory and performing the following steps:
receiving configuration information sent by a network device; and
determining, based on the configuration information, whether to perform one or more of the following operations: cancelling the triggered DSR, stopping the PDCP discard timer, and disabling DSR triggering.

35. A congestion handling apparatus, applied to a network device, comprising: a memory, a transceiver, and a processor;
wherein the memory is used for storing a computer program; the transceiver is used for sending and receiving data under the control of the processor; and the processor is used for reading the computer program from the memory and performing the following step:
sending configuration information and/or indication information to a terminal;
wherein the configuration information is used for configuring the terminal to perform one or more of the following operations when a first condition is met:
cancelling a triggered DSR;
stopping a PDCP discard timer;
disabling DSR triggering;
the indication information comprises one or more of the following:
first indication information;
second indication information;
third indication information.

36. The apparatus according to claim 35, wherein the first indication information is used for indicating that the terminal is to perform or activate PSI-based discarding.

37. The apparatus according to claim 36, wherein the second indication information is used for indicating one or more of the following:
the network device is in a congested state;
the terminal is to perform or activate PSI-based discarding;
the terminal is to use a PDCP discard timer duration corresponding to a congested state, wherein a PDCP discard timer corresponding to the congested state is maintained for a target PDCP SDU, target PDCP PDU, or target PDU set.

38. The apparatus according to claim 36, wherein the third indication information is used for indicating one or more of the following:
one or more cells serving the terminal are in a congested state;
the terminal is to perform or activate PSI-based discarding in the cell;
the terminal is to use a PDCP discard timer duration corresponding to a congested state in the cell, wherein a PDCP discard timer corresponding to the congested state is maintained for a target PDCP SDU, target PDCP PDU, or target PDU set.

39. The apparatus according to any one of claims 36 to 38, wherein one or more of the first indication information, the second indication information, and the third indication information are carried by one or more of the following signaling:
RRC signaling;
MAC CE;
physical layer signaling.

40. The apparatus according to any one of claims 36 to 38, wherein one or more of the first indication information, the second indication information, and the third indication information are further used for indicating a PSI threshold.

41. A congestion handling apparatus, applied to a terminal, comprising:
a first processing unit, configured to perform one or more of the following operations when a first condition is met:
cancelling a triggered DSR;
stopping a PDCP discard timer;
disabling DSR triggering.

42. The apparatus according to claim 41, wherein the first condition comprises one or more of the following:
it is determined that a network device serving the terminal is in a congested state;
it is determined that one or more cells serving the terminal are in a congested state;
first indication information sent by a network device is received;
it is determined that a discard operation needs to be performed on a first target object;
wherein the first indication information is used for indicating that the terminal is to perform or activate protocol data unit set importance (PSI)-based discarding;
the first target object comprises one or more of the following: packet data convergence protocol service data unit (PDCP SDU), packet data convergence protocol protocol data unit (PDCP PDU), and protocol data unit set (PDU set).

43. The apparatus according to claim 42, wherein it is determined that the network device serving the terminal is in the congested state in a case that one or more of the following conditions are met:
second indication information sent by the network device is received;
an amount of data in a buffer of the terminal exceeds a first threshold;
an amount of data for a second target object in a buffer of the terminal exceeds a second threshold.

44. The apparatus according to claim 43, wherein the second indication information is used for indicating one or more of the following:
the network device is in a congested state;
the terminal is to perform or activate PSI-based discarding;
the terminal is to use a PDCP discard timer duration corresponding to a congested state, wherein a PDCP discard timer corresponding to the congested state is maintained for a target PDCP SDU, target PDCP PDU, or target PDU set.

45. The apparatus according to claim 42, wherein it is determined that a cell serving the terminal is in the congested state in a case that one or more of the following conditions are met:
third indication information sent by the network device for the cell is received;
an amount of data in a buffer of the terminal that needs to be transmitted using the cell exceeds a third threshold;
an amount of data for a second target object in a buffer of the terminal that needs to be transmitted using the cell exceeds a fourth threshold.

46. The apparatus according to claim 45, wherein the third indication information is used for indicating one or more of the following:
the cell is in a congested state;
the terminal is to perform or activate PSI-based discarding in the cell;
the terminal is to use a PDCP discard timer duration corresponding to a congested state in the cell, wherein a PDCP discard timer corresponding to the congested state is maintained for a target PDCP SDU, target PDCP PDU, or target PDU set.

47. The apparatus according to any one of claims 43 to 46, wherein the second target object comprises one or more of the following:
data radio bearer (DRB), logical channel group (LCG), logical channel (LCH), PDU set.

48. The apparatus according to any one of claims 43 to 46, wherein one or more of the first indication information, the second indication information, and the third indication information are carried by one or more of the following signaling:
radio resource control (RRC) signaling;
medium access control control element (MAC CE);
physical layer signaling.

49. The apparatus according to any one of claims 43 to 46, wherein one or more of the first indication information, the second indication information, and the third indication information are further used for indicating a PSI threshold.

50. The apparatus according to claim 41, wherein the cancelling the triggered DSR comprises one or more of the following:
cancelling a DSR triggered by a third target object;
cancelling a DSR comprising data of the third target object;
cancelling all triggered DSRs;
wherein the third target object comprises one or more of the following:
a PDU set whose PSI value is lower than a preset PSI threshold;
a PDCP SDU that the terminal needs to discard;
a PDCP PDU that the terminal needs to discard;
a PDU set that the terminal needs to discard.

51. The apparatus according to claim 41, wherein the stopping the PDCP discard timer comprises one or more of the following:
stopping a PDCP discard timer corresponding to a PDCP SDU that the terminal needs to discard;
stopping a PDCP discard timer corresponding to a PDCP PDU that the terminal needs to discard;
stopping a PDCP discard timer corresponding to a PDU set that the terminal needs to discard.

52. The apparatus according to claim 41, wherein the disabling DSR triggering comprises one or more of the following:
disabling DSR triggering;
in a case that a remaining time corresponding to a fourth target object that the terminal needs to discard is less than or equal to a fifth threshold, disabling DSR triggering;
in a case that a remaining time corresponding to a fifth target object that the terminal has already discarded is less than or equal to a sixth threshold, disabling DSR triggering;
wherein the fourth target object or the fifth target object comprises one or more of the following:
PDCP SDU;
PDCP PDU;
PDU set.

53. The apparatus according to claim 42, further comprising:
a third processing unit, configured to, in a case that it is determined that the discard operation needs to be performed on the first target object, and a remaining time corresponding to the first target object is less than or equal to a seventh threshold, disable DSR triggering.

54. The apparatus according to claim 41, further comprising:
a first receiving unit, configured to receive configuration information sent by the network device;
wherein the first processing unit is further configured to determine, based on the configuration information, whether to perform one or more of the following operations: cancelling the triggered DSR, stopping the PDCP discard timer, and disabling DSR triggering.

55. A congestion handling apparatus, applied to a network device, comprising:
a first sending unit, configured to send configuration information and/or indication information to a terminal;
wherein the configuration information is used for configuring the terminal to perform one or more of the following operations when a first condition is met:
cancelling a triggered DSR;
stopping a PDCP discard timer;
disabling DSR triggering;
the indication information comprises one or more of the following:
first indication information;
second indication information;
third indication information.

56. The apparatus according to claim 55, wherein the first indication information is used for indicating that the terminal is to perform or activate PSI-based discarding.

57. The apparatus according to claim 55, wherein the second indication information is used for indicating one or more of the following:
the network device is in a congested state;
the terminal is to perform or activate PSI-based discarding;
the terminal is to use a PDCP discard timer duration corresponding to a congested state, wherein a PDCP discard timer corresponding to the congested state is maintained for a target PDCP SDU, target PDCP PDU, or target PDU set.

58. The apparatus according to claim 55, wherein the third indication information is used for indicating one or more of the following:
one or more cells serving the terminal are in a congested state;
the terminal is to perform or activate PSI-based discarding in the cell;
the terminal is to use a PDCP discard timer duration corresponding to a congested state in the cell, wherein a PDCP discard timer corresponding to the congested state is maintained for a target PDCP SDU, target PDCP PDU, or target PDU set.

59. The apparatus according to any one of claims 55 to 58, wherein one or more of the first indication information, the second indication information, and the third indication information are carried by one or more of the following signaling:
RRC signaling;
MAC CE;
physical layer signaling.

60. The apparatus according to any one of claims 55 to 58, wherein one or more of the first indication information, the second indication information, and the third indication information are further used for indicating a PSI threshold.

61. A processor-readable storage medium storing a computer program, wherein the computer program is used for causing a processor to perform the method according to any one of claims 1 to 20.
